# EUROPÄISCHE PATENTSCHRIFT

(11) **EP 2 949 560 B1**
(45) Veröffentlichungstag und Bekanntmachung des Hinweises auf die Patenterteilung: **26.10.2016**
(21) Anmeldenummer: 15163647.9
(22) Anmeldetag: 12.12.2012
(51) Int. Cl.: B62K 3/00, B62K 13/00

(54) **TRETROLLER**
PEDAL SCOOTER
TROTTINETTE

(30) Priorität: 22.12.2011 AT 500192011
(43) Veröffentlichungstag der Anmeldung: 02.12.2015
(62) Teilanmeldung aus: 12821098.6
(73) Patentinhaber: SCOOT & RIDE GMBH, A-4710 Grieskirchen (AT)
(72) Erfinder: Berndorfer, Wolfgang, 4723 Natternbach (AT); Kirchschlager, Robert, 4060 Leonding (AT)
(74) Vertreter: Ellmeyer, Wolfgang

(56) Entgegenhaltungen:
- AT-A4- 507 557
- CN-U- 201 694 317
- CN-U- 201 980 351
- DE-U1-202006 017 904
- SU-A1- 988 637
- TW-A- 200 624 320
- US-A- 1 379 305

## Beschreibung

Die Erfindung bezieht sich auf einen Tretroller mit einem Fahrgestell, das ein Führungslager für eine das Vorderrad aufnehmende Lenksäule und einen Sitz aufweisenden Tragarm für ein verschwenkbares, mit einem Hinterrad versehenes Trittbrett aufweist.

Bekannte Tretroller weisen ein Fahrgestell auf, das im Wesentlichen ein Führungslager für eine das Vorderrad aufnehmende Lenksäule und ein mit einem Hinterrad versehenes Trittbrett umfasst, das entweder starr mit dem Führungslager verbunden ist oder aus einer verrastbaran Gebrauchsstellung in eine Transportstellung verschwenkbar an diesem angelenkt ist. Um derartige Tretroller mit einer Sitzgelegenheit auszustatten, wurde bereits vorgeschlagen (AT 507 557, DE29819701U), am das Trittbrett mit dem Führungslager verbindenden Tragarm einen Sitz zu befestigen, was jedoch einerseits mit zusätzlichen konstruktiven Maßnahmen verbunden ist und andererseits die Benützung des Tretrollers im Stehen einschränkt. Dokument US 1379305 offenbart die Präambel des Anspruchs 1.

Der Erfindung liegt somit die Aufgabe zugrunde, einen Tretroller der eingangs geschilderten Art mit vergleichsweise einfachen konstruktiven Mitteln so auszugestalten, dass der Sitz wahlweise benützt werden kann, ohne den Gebrauch des Tretrollers mit einer FuBabstützung am Trittbrett zu beeinträchtigen.

Die Erfindung löst die gestellte Aufgabe dadurch, dass der mit dem Trittbrett verbundene Tragarm um eine durch den Mittelpunkt des Hinterrades verlaufende Achse verschwenkbar am Führungslager angelenkt ist.

Durch diese Maßnahmen ergeben sich für den durch den Tragarm und das Trittbrett gebildeten Fahrgestellabschnitt zwei mögliche Gebrauchsstellungen gegenüber dem Führungslager und der Lenksäule. Da dieser Fahrgestellabschnitt für die beiden Gebrauchsstellungen um 180° um eine Achse verschwenkt wird, die durch den Mittelpunkt des Hinterrades verläuft, nimmt das Hinterrad in beiden Gebrauchsstellungen eine übereinstimmende Gebrauchslage ein, was eine konstruktive Voraussetzung für ein gleichbleibendes Fahrverhalten des Tretrollers in den beiden Gebrauchsstellungen zufolge eines übereinstimmenden Radstandes darstellt.

In der Gebrauchsstellung als herkömmlicher Tretroller verläuft das Trittbrett im Wesentlichen parallel zur Fahrbahn, sodass der Standfuß in üblicher Art auf das Trittbrett aufgesetzt werden kann. Nach einer 180°-Drehung des Tragarmes für das Trittbrett ragt das Trittbrett vom Hinterrad nach oben auf und stützt den nunmehr von der Lenksäule nach hinten abstehenden Tragarm ab, auf dem sich der Sitz befindet Der Tragarm kann dabei zur Positionierung des Sitzes um seine Achse drehbar gelagert sein. Besonders vorteilhafte Konstruktionsbedingungen ergeben sich allerdings, wenn der Sitz auf der vom Trittbrett abgekehrten Seite des Tragarmes angeordnet wird. Der Tretroller kann somit als Laufrad für einen sitzenden Benützer dienen, wobei die Beine seitlich neben dem Tragarm des Fahrgestells am Boden abgestoßen werden können, und zwar unbehindert durch das Trittbrett.

Der durch den Tragarm und das Trittbrett gebildete Fahrgestellabschnitt kann in den beiden Gebrauchsstellungen mit Hilfe einer Sperreinrichtung, beispielsweise einem Sperrbolzen oder einer Feststeilschraube, gegenüber dem Führungslager verriegelt werden. Die Sperreinrichtung ist dabei derart auszulegen, dass eine unbeabsichtigte Entriegelung während des Gebrauchs des Tretrollers ausgeschlossen wird.

Besonders vorteilhafte Konstruktionsverhältnisse ergeben sich, wenn der Tragarm und das Trittbrett mit der Schwenkachse den gleichen Winkel einschließen. Auf diese Weise ist sichergestelit, dass das Trittbrett und der Tragarm eine etwa gleiche Länge aufweisen, was vorteilhafte Benützungsbedingungen gewährleistet, insbesondere, wenn berücksichtigt wird, dass das Schwenklager für den Tragarm vorzugsweise in einem der Sitzhöhe angepassten Bodenabstand am Führungslager für die Lenksäule vorgesehen ist.
sondere, wenn berücksichtig wird, dass das Schwenklager für den Tragarm vorzugsweise in einem der Sitzhöhe angepassten Bodenabstand am Führungslager für die Lenksäule vorgesehen ist.

Trotz der Lagerung des Fahrgestellabschnitts aus Tragarm und Trittbrett um eine durch den Mittelpunkt des Hinterrades verlaufende Schwenkachse Ist es möglich, den Tretroller für den Transport zusammenlegbar auszugestalten, wenn das Trittbrett am Tragarm um eine zur Hinterradachse parallele Achse von einer verrastbaren Gebrauchsstellung in eine Transportstellung verschwenkbar gelagert ist. Wird das Trittbrett in der Gebrauchsstellung als üblicher Tretroller gegen den Tragarm eingeschwenkt, so legt sich das Hinterrad im Bereich des Schwenklagers für den Tragarm an diesen an, was eine kompakte Transportstellung mit sich bringt.

In der Zeichnung ist der Erfindungsgegenstand beispielsweise dargestellt. Es zeigen
- Fig. 1: einen erfindungsgemäßen Tretroller in einer vereinfachten Seitenansicht,
- Fig. 2: eine der Fig. 1 entsprechende Darstellung des Tretroller, jedoch in einer Gebrauchsstellung als Laufrad und
- Fig. 3: den Tretroller in einer zusammengeklappten Transportstellung.

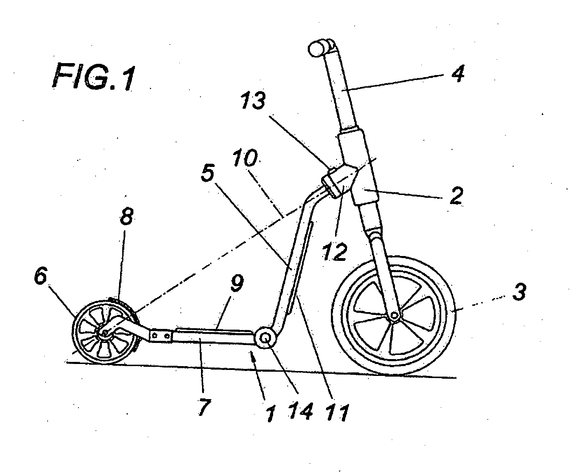

Der Tretroller gemäß dem dargestellten Ausführungsbeispiel weist ein Fahrgestell 1 mit einem Führungslager 2 für eine ein Vorderrad 3 aufnehmende Lenksäule 4 und mit einem Tragarm 5 für ein mit einem Hinterrad 6 versehenes Trittbrett 7 auf. Eine Abdeckung für das Hinterrad 8 kann gemäß der Fig. 1 in herkömmlicher Weise als Bremsvorrichtung genutzt werden. Das Trittbrett 7 kann zur Verbesserung der Rutschsicherheit mit einer Fußauflage 9 versehen sein, die einem Abgleiten des Standfußes vom Trittbrett 7 entgegenwirkt.

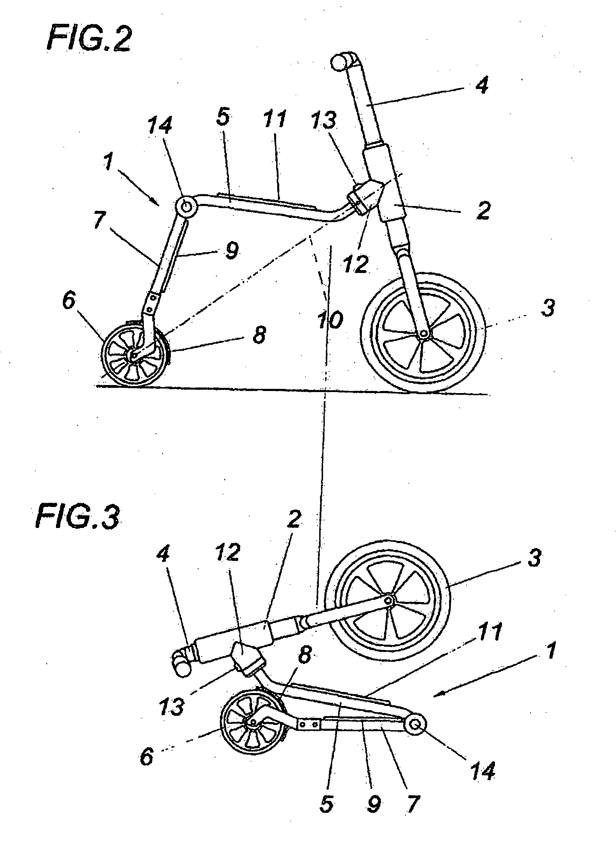

Der Tragarm 5 ist um eine, durch den Mittelpunkt des Hinterrades 6 verlaufende Achse 10 am Führungslager 2 schwenkverstellbar angelenkt. Durch die Schwenkverstellung um die Schwenkachse 10 wird es möglich, den aus Tragarm 5 und Trittbrett 7 gebildeten Fahrgestellabschnitt um 180° aus einer In der Fig. 1 dargestellten Lage für einen Trittbretteinsatz in eine Gebrauchslage zu verschwenken, in der gemäß der Fig. 2 ein Sitz 11 benützt werden kann, der auf der dem Trittbrett 7 abgekehrten Seite des Tragarms 5 vorgesehen ist. Ein auf dem Sitz 11 sitzender Benützer kann somit den Tretroller als Laufrad benützen, indem er sich mit seinen Beinen zu beiden Seiten des Tragarmes 5 auf der Fahrbahn abstößt. Das aufgrund der 180°-Drehung vom Hinterrad 6 nach oben aufragende Trittbrett 7 behindert die Beinbewegung des Laufradbenützers nicht. Wie sich aus dem Vergleich der Fig. 1 und 2 ergibt, behält das Hinterrad 6 in beiden Gebrauchutellungen des Tretroller seine Lage bei, sodass sich der Radstand nicht ändert und für beide Gebrauchsstellungen übereinstimmende Fahr- und Lenkelgenschaften gewährleistet werden. Mit einem Bodenabstand des Anlenklagers 12 des Tragarms 5 am Führungslager 2 entsprechend der Sitzhöhe können besonders vorteilhafte Konstruktionsbedingungen vorgegeben werden, well in diesem Fall der Tragarm 5 mit dem Sitz 11 annähernd parallel zur Fahrbahn verlaufen kann.

Voraussetzung für ein stabiles Fahrverhalten ist die Verriegelung des Fahrgestells 1 in den beiden Gebrauchsstellungen. Zu diesem Zweck kann das Antenklager 12 für den Tragarm 5 mit einer Sperreinrichtung 13 versehen sein, beispielsweise einer gewöhnlichen Sperraste. Der Betätigungsmechanismus der Sperreinrichtung 13 kann dabei in herkömmlicher Weise sicherstellen, dass eine unbeabsichtigte Entriegelung während der Benutzung des Tretrollers ausgeschlossen wird.

Wie der Fig. 3 entnommen werden kann, ist es trotz der Anlenkung des Tragarmes 5 am Führungslager 2 um eine, durch die Hinterradachse verlaufenden Achse 10 möglich, führ den Tretroller eine zusammengeklappte Transportstellung zu erreichen. Zu diesem Zweck kann zwischen dem Tragarm 5 und dem Trittbrett 7 ein zumindest in den Gebrauchsstellungen des Tretrollers verrastbares Gelenk 14 vorgesehen werden. Nach dem Lösen der Verrastung kann das Trittbrett 7 gegen den Tragarm 5 eingeschwenkt werden, bis das Hinterrad 6 am Tragarm 5 anliegt. Je nach der Schwenklage des Tragarmes 6 im Anfenklager 12 werden unterschiedliche Transportstellungen möglich. Eine davon ist in der Fig. 3 dargestellt.

## Patentansprüche

1. Tretroller beziehungsweise Laufrad mit einem Fahrgestell (1),
das ein Führungslager (2) welches eine Vorderrad (3) aufnehmende Lenksäule (4) und
einen Sitz (11) aufweisenden Tragarm (5) mit einem verschwenkbaren, mit einem Hinterrad (8) versehenen Trittbrett (7) lagert aufweist,
**dadurch gekennzeichnet, dass**
der mit dem Trittbrett (7) verbundene Tragarm (5) am Führungslager (2) angelenkt ist, wobei der Tragarm (5) und Trittbrett (7) umfassende Fahrgestellabschnitt von einer Gebrauchsstellung als Tretroller, in welcher das Trittbrett (7) im Wesentlichen parallel zu der Fahrbahn verläuft, durch eine Drehung um 180° um die angelenkte Achse des Tragarms (5) in eine Gebrauchsstellung als Laufrad überführbar ist, in welcher Gebrauchsstellung als Laufrad das Trittbrett (7) das den von der Lenksäule nach hinten ragenden Tragarm (5) abstützt, auf welchem Tragarm (5) sich der Sitz (11) auf der abgekehrten Seite zu dem Trittbrett (7) befindet.

2. Tretroller nach Anspruch 1, **dadurch gekennzeichnet, dass**
der durch Tragarm (5) und Trittbrett (7) gebildete Fahrgestehabschnitt durch eine Sperrvorrichtung (13) in den beiden Gebrauchsstellungen gegenüber dem Führungslager (2) verriegelbar ist.

3. Tretroller nach einem der Ansprüche 1 bis 2, **dadurch gekennzeichnet, dass** die angelenkte Achse des Tragarms (5) eine Schwenkachse (10) ist, zu welcher Schwenkachse (10) der Tragarm (5) und das Trittbrett (7) den gleichen Winkel einschließen.

4. Tretroller nach einem der Ansprüche 1 bis 3, **dadurch gekennzeichnet, dass** der Tragarm (5) und das Trittbrett (7) die gleiche Länge aufweisen.

5. Tretroller nach einem der Ansprüche 1 bis 4, **dadurch gekennzeichnet, dass** zwischen dem Tragarm (5) und dem Trittbrett (7) ein verrastbares Gelenk (14) angeordnet ist.

## Claims

1. A scooter or run bike comprising a chassis (1),
which has a guide bearing (2) supporting a steering column (4), which holds a front wheel (3), and a supporting arm (5), which has a seat (11), comprising a pivotable footboard (7) provided with a rear wheel (8),
**characterized in that**
the supporting arm (5) connected to the footboard (7) is hinged to the guide bearing (2), wherein the chassis portion comprising the supporting arm (5) and the footboard (7) is transformable, by a 180° rotation about the hinged axis of the supporting arm (5), from a usage position as scooter, in which the footboard (7) runs substantially parallel to the roadway, into a usage position as run bike, in which usage position as run bike the footboard (7) supports the supporting arm (5) extending backward from the steering column, the seat (11) being arranged on said supporting arm (5) on the side facing away from the footboard (7).

2. The scooter according to claim 1, **characterized in that**
the chassis portion formed by the supporting arm (5) and the footboard (7) is lockable, in both usage positions, with respect to the guide bearing (2) by a locking device.

3. The scooter according to claim 1 or 2, **characterized in that**
the hinged axis of the supporting arm (5) is a pivot axis (10), with respect to which pivot axis (10) the supporting arm (5) and the footboard (7) enclose the same angle.

4. The scooter according to any one of claims 1 to 3, **characterized in that**
the supporting arm (5) and the footboard (7) have the same length.

5. The scooter according to any one of claims 1 to 4, **characterized in that**
an engageable hinge (14) is arranged between the supporting arm (5) and the footboard (7).

## Revendications

1. Trottinette ou draisienne avec un châssis (1)
présentant un palier de guidage (2) qui supporte une colonne de maniement (4) accueillant une roue avant (3) et qui supporte un bras de support (5) présentant un siège (11), ledit bras de support (5) comprenant un marchepied (7) pivotable fourni d'une roue arrière (8),
**caractérisée en ce que**
le bras de support (5) relié au marchepied (7) est articulé au palier de guidage (2),
la partie de châssis comprenant le bras de support (5) et le marchepied (7) pouvant être transformée, par une rotation de 180° autour de l'axe articulé du bras de support (5), d'une position d'utilisation comme trottinette, dans laquelle le marchepied (7) s'étend essentiellement parallèlement à la chaussée, en une position d'utilisation comme draisienne, position d'utilisation dans laquelle le marchepied (7) supporte le bras de support (5) s'étendant vers l'arrière de la colonne de maniement, le siège (11) étant disposé sur ledit bras de support (5) sur le côté opposé du marchepied (7).

2. Trottinette selon la revendication 1, **caractérisée en ce que**
la partie de châssis formée par le bras de support (5) et le marchepied (7) est verrouillable, dans les deux positions d'utilisation, par rapport au palier de guidage (2) par un dispositif de verrouillage (13).

3. Trottinette selon la revendication 1 ou 2, **caractérisée en ce que**
l'axe articulé du bras de support (5) est un axe de pivotage (10) par rapport auquel le bras de support (5) et le marchepied (7) incluent le même angle.

4. Trottinette selon l'une des revendications 1 à 3, **caractérisée en ce que**
le bras de support (5) et le marchepied (7) présentent la même longueur.

5. Trottinette selon l'une des revendications 1 à 4, **caractérisée en ce que**
une articulation enclenchable (14) est disposée entre le bras de support (5) et le marchepied (7).
